(19) Europäisches Patentamt
European Patent Office
Office européen des brevets

(11) **EP 4 660 899 A1**

(12) **EUROPEAN PATENT APPLICATION**

(43) Date of publication:
**10.12.2025 Bulletin 2025/50**

(51) International Patent Classification (IPC):
***G06N 10/40*** *(2022.01)* ***G06N 10/70*** *(2022.01)*

(21) Application number: **25180611.3**

(22) Date of filing: **03.06.2025**

(52) Cooperative Patent Classification (CPC):
**G06N 10/70; B82Y 10/00; G06N 10/40; H04B 10/70**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **04.06.2024 US 202463655738 P**

(71) Applicant: **Xanadu Quantum Technologies Inc.
Toronto, Ontario M5G 2C8 (CA)**

(72) Inventors:
• **GONZALEZ ARCINIEGAS, Carlos Andres
Toronto, M5G 2C8 (CA)**
• **BOURASSA, Joseph Eli
Toronto, M5G 2C8 (CA)**

(74) Representative: **Hoyng Rokh Monegier B.V.
Rembrandt Tower, 30th Floor
Amstelplein 1
1096 HA Amsterdam (NL)**

(54) **METHOD AND SYSTEM FOR GENERATING GOTTESMAN-KITAEV-PRESKILL STATES**

(57) There is described a method of processing photonic states generally having: propagating photonic states along optical links of an optical circuit having two-mode entangling gates optically coupling pair(s) of the optical links to one another, the two-mode entangling gates actuatable in either an entanglement state or a routing state, and Gaussian detector(s) downstream of one or more of the optical links; receiving a signal indicating breedability statuses associated to the photonic states; and actuating the two-mode entangling gates in either the entanglement state or the routing state based on said breedability statuses, said actuating including i) actuating one of the two-mode entangling gates into the entanglement state when the optical links of the corresponding pair both propagate a breedable photonic state, and ii) actuating another one of the two-mode entangling gates into the routing state when one of the optical links of the corresponding pair propagates a non-breedable photonic state.

Fig. 1

**Description**

**FIELD**

The improvements relate to quantum optical circuits, and more specifically, to the generation of Gottesman-Kitaev-Preskill (GKP) states for use in quantum computing.

**BACKGROUND**

Quantum computing is a type of computation whose operations can leverage quantum mechanical effects, such as superposition, interference, and entanglement. Devices that perform quantum computations are known as quantum computers. Most quantum computing models are based on the quantum bit, or "qubit" model. Gottesman-Kitaev-Preskill (GKP) qubits are a topic of research for error correction when encoding qubits.

In some applications, a photonic quantum computing system typically includes a state factory including one or more photonic state sources, an array of N-to-1 multiplexers, a breeding unit, and a photonic quantum processing unit (QPU). In these applications, the photonic state sources generate photonic states that may or may not be breedable, i.e., of satisfactory quality or usefulness, and transmit them towards the array of N-to-1 multiplexers. Each N-to-1 multiplexer can then relay the best photonic state out of the N photonic states to the breeding unit and discard the other photonic states. Once the best photonic states outputted by the N-to-1 multiplexers are bred at the breeding unit, the QPU processes the resulting photonic states according to predetermined quantum computations. Although existing photonic quantum computing systems are satisfactory to a certain degree, there remains room for improvement.

**SUMMARY**

With the architecture of existing photonic quantum computing systems, it was found that some photonic states of superior quality or usefulness may be discarded over some photonic states of inferior quality or usefulness. Indeed, when the second best photonic state of a first N-to-1 multiplexer is of better quality or usefulness than the best photonic state of a second N-to-1 multiplexer, the best photonic state of the second N-to-1 multiplexer would make its way to the breeding unit even though it is of poorer quality than the second best photonic state which is regrettably discarded at the first N-to-1 multiplexer. This phenomenon can act as a penalty on the efficiency at which breedable photonic states can be generated. In this disclosure, there is described a method and system for processing photonic states and for generating GKP states, which can alleviate at least some of the drawbacks of the existing photonic quantum computing systems.

In accordance with a first aspect of the present disclosure, there is provided a method of generating GKP states, the method comprising: using a plurality of photonic state sources, propagating a plurality of photonic states along respective optical links of an optical circuit, the optical circuit having a plurality of two-mode entangling gates optically coupling pair(s) of the optical links to one another, the two-mode entangling gates actuatable in either an entanglement state or a routing state, and one or more Gaussian detectors downstream of one or more of the optical links; receiving a signal indicating breedability statuses associated to the plurality of photonic states propagated along the respective optical links; actuating the two-mode entangling gates in either the entanglement state or the routing state based on said breedability statuses, said actuating including i) actuating one of the two-mode entangling gates into the entanglement state when the optical links of the corresponding pair both propagate a breedable photonic state, and ii) actuating another one of the two-mode entangling gates into the routing state when one of the optical links of the corresponding pair propagates a non-breedable photonic state; and generating, by propagating the plurality of photonic states through the two-mode entangling gates and using the Gaussian detector(s), one or more GKP state(s).

Further in accordance with the first aspect of the present disclosure, when the other one of the two-mode entangling gates is actuated into the routing state, a breedable photonic state propagating along the other one of the optical links of the corresponding pair can for example be routed to another pair of the optical links.

Still further in accordance with the first aspect of the present disclosure, the two-mode entangling gates can for example be actuatable to modify a splitting ratio between the optical links of corresponding pairs, the splitting ratio ranging between 0% and 100%, inclusively.

Still further in accordance with the first aspect of the present disclosure, a splitting ratio of 0% or 100% can for example correspond to the routing state, and a splitting ratio between 0% and 100%, exclusively, can for example correspond to the entanglement state.

Still further in accordance with the first aspect of the present disclosure, the splitting ratio of the entanglement state can for example be based on a ratio between a first peak separation value indicative of a peak separation between peaks of a first one of the breedable photonic states and a second separation value indicative of a peak separation between peaks of a second one of the breedable photonic states.

Still further in accordance with the first aspect of the present disclosure, at least one of the two-mode entangling gates can for example be provided in the form of an adaptive beamsplitter actuatable to modify a beamsplitter angle between the optical links of the corresponding pair, the beamsplitter angle can for example range between 0 radians and $\pi/2$ radians, inclusively.

Still further in accordance with the first aspect of the present disclosure, a beamsplitter angle of 0 radians or $\pi/2$ radians can for example correspond to the routing state, and a splitting ratio between 0 radians and $\pi/2$ radians, exclusively, can for example correspond to the entanglement state.

Still further in accordance with the first aspect of the present disclosure, at least one of the one or more Gaussian detectors can for example be provided in the form of a homodyne detector.

Still further in accordance with the first aspect of the present disclosure, the plurality of photonic state sources can for example include an integer number M of photonic state sources, and the one or more Gaussian detectors can for example include an integer number N of Gaussian detectors, wherein the integer number N corresponds to M-1, the integer M being 2 or more.

Still further in accordance with the first aspect of the present disclosure, the integer number M can for example be at least four (4), preferably at least eight (8) and most preferably at least sixteen (16).

Still further in accordance with the first aspect of the present disclosure, the photonic states can for example be provided in the form of at least one of: squeezed photonic states, two-peak photonic states, three-peak photonic states, and four-peak photonic states.

Still further in accordance with the first aspect of the present disclosure, the method can for example further comprise propagating another plurality of photonic states along the respective optical links of the optical circuit, receiving another signal indicating new breedability statuses associated to the other plurality of photonic states propagated along the respective optical links, and modifying said actuating the two-mode entangling gates in either the entanglement state or the routing state based on the new breedability statuses.

Still further in accordance with the first aspect of the present disclosure, the plurality of photonic state sources can for example be directly connected to the respective optical links.

In accordance with a second aspect of the present disclosure, there is provided a system for generating GKP states, the system comprising: an optical circuit having: a plurality of optical links, a plurality of two-mode entangling gates optically coupling pair(s) of the optical links to one another, the two-mode entangling gates actuatable in either an entanglement state or a routing state, and one or more Gaussian detectors downstream of one or more of the optical links; a plurality of photonic state sources propagating a plurality of photonic states along respective ones of the plurality of optical links; and a controller having a processor and a non-volatile memory having stored thereon instructions that when executed perform the steps of: receiving a signal indicating breedability statuses associated to the plurality of photonic states propagated along the respective optical links; and actuating the two-mode entangling gates in either the entanglement state or the routing state based on said breedability statuses, said actuating including i) actuating one of the two-mode entangling gates into the entanglement state when the optical links of the corresponding pair both propagate a breedable photonic state, and ii) actuating another one of the two-mode entangling gates into the routing state when one of the optical links of the corresponding pair propagates a non-breedable photonic state; wherein one or more GKP state(s) are generated by propagating the plurality of photonic states through the two-mode entangling gates and using the Gaussian detector(s).

Further in accordance with the second aspect of the present disclosure, the two-mode entangling gates can for example be actuatable to modify a splitting ratio between the optical links of corresponding pairs, the splitting ratio can for example range between 0% and 100%, inclusively.

Still further in accordance with the second aspect of the present disclosure, a splitting ratio of 0% or 100% can for example correspond to the routing state, and a splitting ratio between 0% and 100%, exclusively, can for example correspond to the entanglement state.

Still further in accordance with the second aspect of the present disclosure, the splitting ratio of the entanglement state can for example be based on separations between peaks of the breedable photonic states.

Still further in accordance with the second aspect of the present disclosure, at least one of the two-mode entangling gates can for example be provided in the form of an adaptive beamsplitter actuatable to modify a beamsplitter angle between the optical links of corresponding pairs, the beamsplitter angle can for example range between 0 radians and $\pi/2$ radians, inclusively.

Still further in accordance with the second aspect of the present disclosure, a beamsplitter angle of 0 radians or $\pi/2$ radians can for example correspond to the routing state, and a splitting ratio between 0 radians and $\pi/2$ radians, exclusively, can for example correspond to the entanglement state.

Still further in accordance with the second aspect of the present disclosure, at least one of the one or more Gaussian detectors can for example be provided in the form of homodyne detectors.

In accordance with a third aspect of the present disclosure, there is provided a method of processing photonic states, the method comprising: using a plurality of photonic state sources, propagating a plurality of photonic states along respective optical links of an optical circuit, the optical circuit having a plurality of two-mode entangling gates optically coupling pair(s) of the optical links to one another, the two-mode entangling gates actuatable in either an entanglement state or a routing state, and one or more Gaussian detectors downstream of one or more of the optical links; receiving a signal indicating breedability statuses associated to the plurality of photonic states propagated along the respective optical links; and actuating the two-mode entangling gates in either the entanglement state or the routing state based on said breedability statuses, said actuating including i) actuating one of the two-mode entangling gates into the entanglement state when the optical links of the corresponding pair both propagate a breedable photonic state, and ii) actuating another one of the two-mode entangling gates into the routing state when one of the optical links of the corresponding pair propagates a non-breedable photonic state.

In accordance with a fourth aspect of the present disclosure, there is provided a system for processing photonic states, the system comprising: an optical circuit having: a plurality of optical links, a plurality of two-mode entangling gates optically coupling pair(s) of the optical links to one another, the two-mode entangling gates actuatable in either an entanglement state or a routing state, and one or more Gaussian detectors downstream of one or more of the optical links; a plurality of photonic state sources propagating a plurality of photonic states along respective ones of the plurality of optical links; and a controller having a processor and a non-volatile memory having stored thereon instructions that when executed perform the steps of: receiving a signal indicating breedability statuses associated to the plurality of photonic states propagated along the respective optical links; and actuating the two-mode entangling gates in either the entanglement state or the routing state based on said breedability statuses, said actuating including i) actuating one of the two-mode entangling gates into the entanglement state when the optical links of the corresponding pair both propagate a breedable photonic state, and ii) actuating another one of the two-mode entangling gates into the routing state when one of the optical links of the corresponding pair propagates a non-breedable photonic state.

All technical implementation details and advantages described with respect to a particular aspect of the present invention are self-evidently mutatis mutandis applicable for all other aspects of the present invention.

Many further features and combinations thereof concerning the present improvements will appear to those skilled in the art following a reading of the instant disclosure.

## DESCRIPTION OF THE FIGURES

In the figures,

Fig. 1 is a graph showing an example of a multi-peak continuous-variable photonic state, in accordance with one or more embodiments;

Fig. 2 is a schematic view of an example of a photonic state source, in accordance with one or more embodiments;

Fig. 3 is a schematic view of an example of a photonic quantum computing system, showing photonic state sources, a system for processing photonic states into GKP states, and a QPU, in accordance with one or more embodiments;

Fig. 4 is a schematic view of an example of a system for processing photonic states into GKP states, showing an optical circuit and a controller, in accordance with one or more embodiments;

Fig. 4A is a schematic view of an exemplary entangling gate and detector assembly, in accordance with one or more embodiments;

Figs. 5A through 5F are graphs showing evolution of total circuit depth for consecutive breeding rounds using a conventional array of N-to-1 multiplexers and breeding units (in solid lines) and the system of Fig. 4 (in dashed lines), in accordance with one or more embodiments;

Fig. 6A is a schematic view of an example of an optical circuit for processing photonic states, showing the optical circuit arbitrarily receiving seven breedable photonic states and nine non-breedable photonic states, in accordance with one or more embodiments;

Fig. 6B is a schematic view showing an optical circuit equivalent to the optical circuit of Fig. 6A, showing a binary tree breeder and linear cascade breeder configuration, in accordance with one or more embodiments;

Fig. 6C is a schematic view showing an optical circuit equivalent to the optical circuit of Fig. 6A, showing a linear cascade breeder only configuration, in accordance with one or more embodiments;

Fig. 7 is a schematic view of an example of a computing device of the controller of the system of Fig. 4, in accordance with one or more embodiments; and

Fig. 8 is a flow chart of a method for generating GKP states, in accordance with one or more embodiments.

## DETAILED DESCRIPTION

In continuous-variable (CV) quantum computing (QC), the Hilbert space is infinite dimensional. Examples of continuous-variable QC architectures include optical modes, microwave-cavity modes, and vibrational modes of trapped ions. Photonic CV QC architectures have been found to be particularly interesting due to their scalability and the ability to leverage existing photonic technologies. Bosonic quantum error-correcting codes (or simply bosonic codes) embed discrete quantum information into CV systems. In doing so, the Bosonic quantum error-correcting codes can map CV noise into effective noise acting on the encoded states. One popular example of a bosonic code is the Gotesman-Kitaev-Preskill (GKP) code. For photonic QC architectures, methods and systems to generate approximate GKP state(s) (or equivalently referred to as "GKP state(s)") are sought after in the industry.

According to an aspect, a method of generating Gottesman-Kitaev-Preskill (GKP) states is provided, the method comprising: using a plurality of photonic state sources, propagating a plurality of photonic states along respective optical links of an optical circuit, the optical circuit having a plurality of two-mode entangling gates optically coupling pair(s) of the optical links to one another, the two-mode entangling gates actuatable in either an entanglement state or a routing state, and one or more Gaussian detectors downstream of one or more of the optical links; receiving a signal indicating breedability statuses associated to the plurality of photonic states propagated along the respective optical links; actuating the two-mode entangling gates in either the entanglement state or the routing state based on said breedability statuses, said actuating including i) actuating one of the two-mode entangling gates into the entanglement state when the optical links of the corresponding pair both propagate a breedable photonic state, and ii) actuating another one of the two-mode entangling gates into the routing state when one of the optical links of the corresponding pair propagates a non-breedable photonic state; and generating, by propagating the plurality of photonic states through the two-mode entangling gates and using the Gaussian detector(s), one or more GKP state(s).

In various embodiments, when the other one of the two-mode entangling gates is actuated into the routing state, a breedable photonic state propagating along the other one of the optical links of the corresponding pair is routed to another pair of the optical links.

In various embodiments the two-mode entangling gates are actuatable to modify a splitting ratio between the optical links of corresponding pairs, the splitting ratio ranging between 0% and 100%, inclusively, wherein a splitting ratio of 0% or 100% corresponds to the routing state, and a splitting ratio between 0% and 100%, exclusively, corresponds to the entanglement state.

In various embodiments the splitting ratio of the entanglement state is based on a ratio between a first tooth separation value indicative of a tooth separation between peaks of a first one of the breedable photonic states and a second separation value indicative of a tooth separation between peaks of a second one of the breedable photonic states.

In various embodiments at least one of the two-mode entangling gates is provided in the form of an adaptive beamsplitter actuatable to modify a beamsplitter angle between the optical links of the corresponding pair, the beamsplitter angle ranging between 0 radians and $\pi/2$ radians, inclusively, wherein a beamsplitter angle of 0 radians or $\pi/2$ radians corresponds to the routing state, and a splitting ratio between 0 radians and $\pi/2$ radians, exclusively, corresponds to the entanglement state.

In various embodiments at least one of the one or more Gaussian detectors is provided in the form of a homodyne detector.

In various embodiments the plurality of photonic state sources includes an integer number M of photonic state sources, and the one or more Gaussian detectors includes an integer number N of Gaussian detectors, wherein the integer number N corresponds to M-1, the integer M being 2 or more.

In various embodiments the photonic states are provided in the form of at least one of: squeezed photonic states, two-peak photonic states, three-peak photonic states, and four-peak photonic states.

In various embodiments the method further comprises propagating another plurality of photonic states along the respective optical links of the optical circuit, receiving another signal indicating new breedability statuses associated to the other plurality of photonic states propagated along the respective optical links, and modifying said actuating the two-mode entangling gates in either the entanglement state or the routing state based on the new breedability statuses.

In various embodiments the plurality of photonic state sources are directly connected to the respective optical links.

According to a further aspect a system for generating Gottesman-Kitaev-Preskill (GKP) states is provided, the system comprising: an optical circuit having: a plurality of optical links, a plurality of two-mode entangling gates optically coupling pair(s) of the optical links to one another, the two-mode entangling gates actuatable in either an entanglement state or a routing state, and one or more Gaussian detectors downstream of one or more of the optical links; a plurality of photonic state sources propagating a plurality of photonic states along respective ones of the plurality of optical links; and a controller having a processor and a non-volatile memory having stored thereon instructions that when executed perform the steps of: receiving a signal indicating breedability statuses associated to the plurality of photonic states propagated along the respective optical links; and actuating the two-mode entangling gates in either the entanglement state or the routing state based on said breedability statuses, said actuating including i) actuating one of the two-mode entangling gates into the entanglement state when the optical links of the corresponding pair both propagate a breedable photonic state, and ii) actuating another one of the two-mode entangling gates into the routing state when one of the optical links of the corresponding pair propagates a non-breedable photonic state; wherein one or more GKP state(s) are generated by propagating the plurality of photonic states through the two-mode entangling gates and using the Gaussian detector(s).

In various embodiments the two-mode entangling gates are actuatable to modify a splitting ratio between the optical links of corresponding pairs, the splitting ratio ranging between 0% and 100%, inclusively, wherein a splitting ratio of 0% or 100% corresponds to the routing state, and a splitting ratio between 0% and 100%, exclusively, corresponds to the entanglement state.

In various embodiments the splitting ratio of the entanglement state is based on separations between peaks of the breedable photonic states.

In various embodiments at least one of the two-mode entangling gates is provided in the form of an adaptive beamsplitter actuatable to modify a beamsplitter angle between the optical links of corresponding pairs, the beamsplitter angle ranging between 0 radians and $\pi/2$ radians, inclusively, wherein a beamsplitter angle of 0 radians or $\pi/2$ radians corresponds to the routing state, and a splitting ratio between 0 radians and $\pi/2$ radians, exclusively, corresponds to the entanglement state.

In various embodiments at least one of the one or more Gaussian detectors is provided in the form of homodyne detectors.

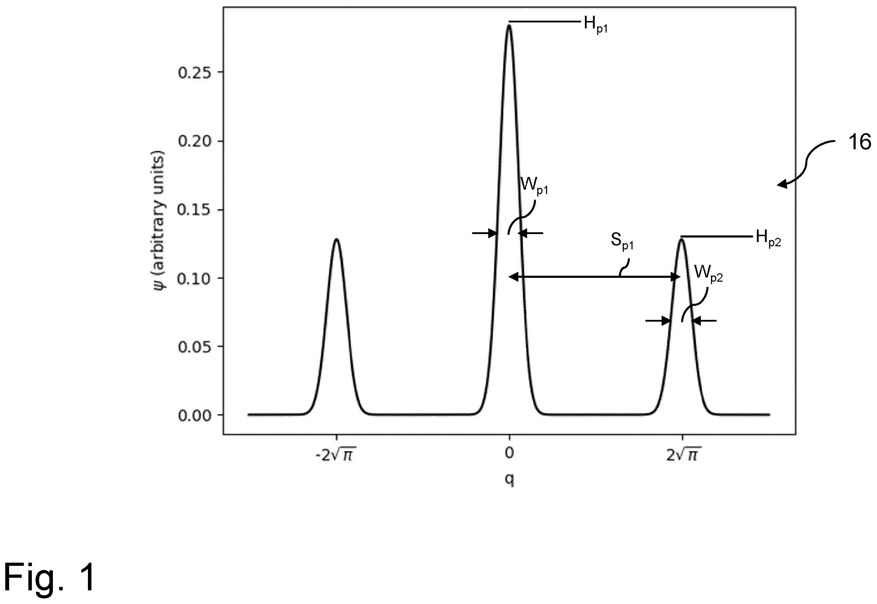

Fig. 1 shows an example representation of a CV photonic state 16 (hereinafter simply referred to "photonic state"). In this particular example, the photonic state 16 is a multi-peak photonic state (specifically a 3-peak photonic state). In view of basic quantum computing notations, an eigenstate of position is indicated by $|\cdot\rangle_q$ and an eigenstate of momentum is indicated by $|\cdot\rangle_p$, where $\cdot$ represents the position or momentum of the state, respectively. The wave functions of position and momentum eigenstates can be Dirac delta functions in position and momentum space, respectively. Consider a state $|\psi\rangle$. The state's position-space wave function is given by $\psi(s) = ({}_q\langle s|\psi\rangle$ while the state's momentum-space wave function is given by $\tilde{\psi}(s) := ({}_p\langle s|\psi\rangle$.

In the GKP encoding, the logical basis states are given as $\{|0_{\text{GKP}}\rangle, |1_{\text{GKP}}\rangle\}$, where:

$$|0_{\text{GKP}}\rangle = \sum_{n\in\mathbb{Z}} \left|2n\sqrt{\pi}\right\rangle_q = \sum_{n\in\mathbb{Z}} \left|n\sqrt{\pi}\right\rangle_p,$$

and

$$|1_{\text{GKP}}\rangle = \sum_{n\in\mathbb{Z}} |(2n+1)\sqrt{\pi}\rangle_q = \sum_{n\in\mathbb{Z}} [(-1)^n |n\sqrt{\pi}\rangle_p].$$

In position space, the wave functions of $|0_{\text{GKP}}\rangle$ and $|1_{\text{GKP}}\rangle$ are Dirac combs with a state-dependent offset:

$$\psi_{0,\text{GKP}}(s) = \sum_{n\in\mathbb{Z}} \delta\left(s - 2n\sqrt{\pi}\right),$$

and

$$\psi_{0,\text{GKP}}(s) = \sum_{n\in\mathbb{Z}} \delta\left(s - 2n\sqrt{\pi}\right).$$

In momentum space, the wave functions of $|0_{\text{GKP}}\rangle$ and $|1_{\text{GKP}}\rangle$ are Dirac combs with a state-dependent phase between peaks:

$$\tilde{\psi}_{0,\text{GKP}}(s) = \frac{1}{\sqrt{2}}\sum_{n\in\mathbb{Z}} \delta\left(s - n\sqrt{\pi}\right),$$

and

$$\tilde{\psi}_{1,\text{GKP}}(s) = \frac{1}{\sqrt{2}}\sum_{n\in\mathbb{Z}}(-1)^n\delta\big(s - n\sqrt{\pi}\big).$$

Ideal GKP states as defined above have infinite energy due to their infinite number of infinitely narrow peaks. However, in practice, approximate GKP states with non-zero peak widths, finite peak heights, and a finite total number of peaks can perform well enough to be useful in quantum computation. It will therefore be understood that the term "GKP state(s)" used throughout this disclosure is meant to encompass approximate, practical versions of GKP state(s) that can be used for quantum computation purposes, for instance.

The photonic states can include, but are not limited to, squeezed photonic states such as one-peak photonic states, two-peak photonic states (also referred to as a squeezed cat states or simply cat states), three-peak photonic states, and four-peak photonic states, to name a few examples. In these embodiments, the photonic states can be defined by peak height(s) $H_{pj}$, peak width(s) $W_{pj}$, peak (or tooth) separation(s) $S_{pj}$, and the like, with the index j denoting an integer corresponding to different peaks, for instance. In some instances, peak separations in a given photonic state may be the same between each adjacent peak of that photonic state, in which case the index j may be dropped. Examples of such state parameters are overlaid onto the photonic state as shown in Fig. 1. In practice, approximate eigenstates of position and momentum (where the delta functions are "smeared" and not infinitely narrow) may be referred to as "squeezed states" or "single-peak" states. States with two peaks are referred to as "cat states." Other photonic states can be referred to as three-peak photonic states, four-peak photonic states or more generally as multi-peak photonic states. Other types of continuous-variable photonic states can include Fock states, in some embodiments.

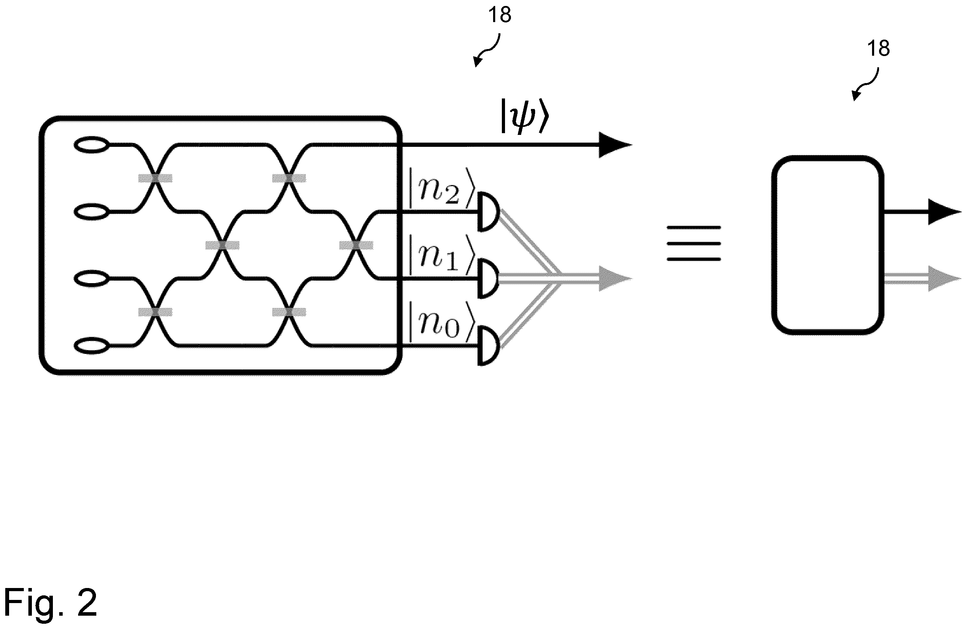

Gaussian Boson sampling (GBS) typically refers to the practice of preparing a multi-mode photonic state and measuring a subset (or all) of its modes in the Fock basis. In the context of preparing states for photonic quantum computing, GBS typically involves preparing a multi-mode state by interfering *N* squeezed states via a network of beamsplitters and measuring N - 1 modes in the Fock basis with photon-number-resolving detectors (PNRs), an example of which is represented at 18 in Fig. 2. The output of a GBS device is a non-Gaussian state (e.g., a cat state or a multi-peak photonic state) that can be used as a resource for GKP-based quantum computation, where the number of photons detected at each PNR is indicative of the properties of the non-Gaussian state. While GBS devices can directly produce a number of useful resource states (e.g., squeezed cat states, 3-peak states, GKP states, etc.), GBS is non-deterministic. The probability of having a usable GBS output can be boosted by utilizing multiple GBS devices in parallel and multiplexing the outputs to select for the one(s) with the most favourable properties. The probability of directly producing high-quality GKP states, for example, is quite low. For this reason, methods and systems for generating GKP states are proposed herein. Note that while non-Gaussian states are produced non-deterministically by GBS devices, single-peak/squeezed states can be produced deterministically using squeezers (e.g., in the case of photonics, microring resonators).

Because the probability of directly producing a GKP state using a conventional GBS device is relatively low, GKP "breeding" techniques have been developed. These breeding techniques take as input other photonic states that are easier to produce (e.g., squeezed states, cat states, 3-peak states, etc.), and utilize a breeding circuit that entangles various input states (e.g., using beamsplitters) and performs homodyne measurements on the states in order to produce the GKP states. It was known to provide a photonic quantum computing architecture involving: (1) GBS devices (and optionally squeezers) producing some combination of photonic states (e.g., squeezed states, cat states, 3-peak states, etc.); (2) a multiplexing circuit selecting desired photonic states out of the ones produced by the GBS devices (and squeezers) and discarding the other photonic states; and (3) a breeding circuit that uses the selected photonic states selected by the multiplexing circuit to generate GKP states. However, as discussed in greater detail above, discarding photonic states, that may be of satisfactory usefulness or quality, can act as a penalty on the efficiency at which breedable photonic states can be generated. There was thus an opportunity to improve the existing GKP state generation systems.

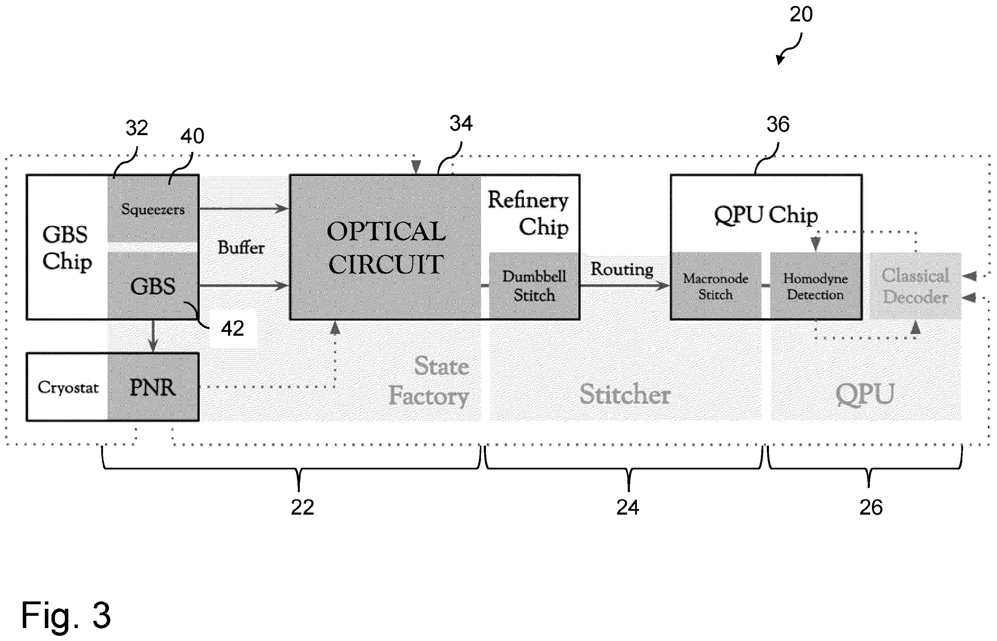

Fig. 3 shows an example of a photonic quantum computing system 20, in accordance with a specific embodiment. As depicted, the photonic quantum computing system 20 has a state factory 22 producing GKP states, a stitcher 24 entangling some of the GKP states to one another, and a photonic quantum processing unit (QPU) 26. Although the state factory 22, the stitcher 24, and the QPU 26 are described as separate functional elements, some portion of them can share a common photonic chip. For instance, a first photonic chip 32 referred to as the GBS chip 32 can include a first portion of the state factory 22, a second photonic chip 34 referred to as the refinery chip can include a second portion of the state factory 22 and a first portion of the stitcher 24, and a third photonic chip 36 referred to as the QPU chip can include a second portion of the stitcher 24 and the QPU 26. It is intended that the illustrated architecture for the photonic quantum computing system 20 is meant to be exemplary only, as other architectures can be provided in some other embodiments. As illustrated, the state factory 22 includes a number of squeezers 40 and/or GBS units 42, acting as photonic state sources producing photonic states, that may be breedable photonic states or non-breedable photonic states, which are propagated towards an optical circuit for processing the photonic states and generating GKP states. Breedability signal(s) indicating which one(s) of the photonic states are breedable or non-breedable is(are) transmitted from the GBS chip 32 to the refinery chip 34 to help in the processing of the photonic states.

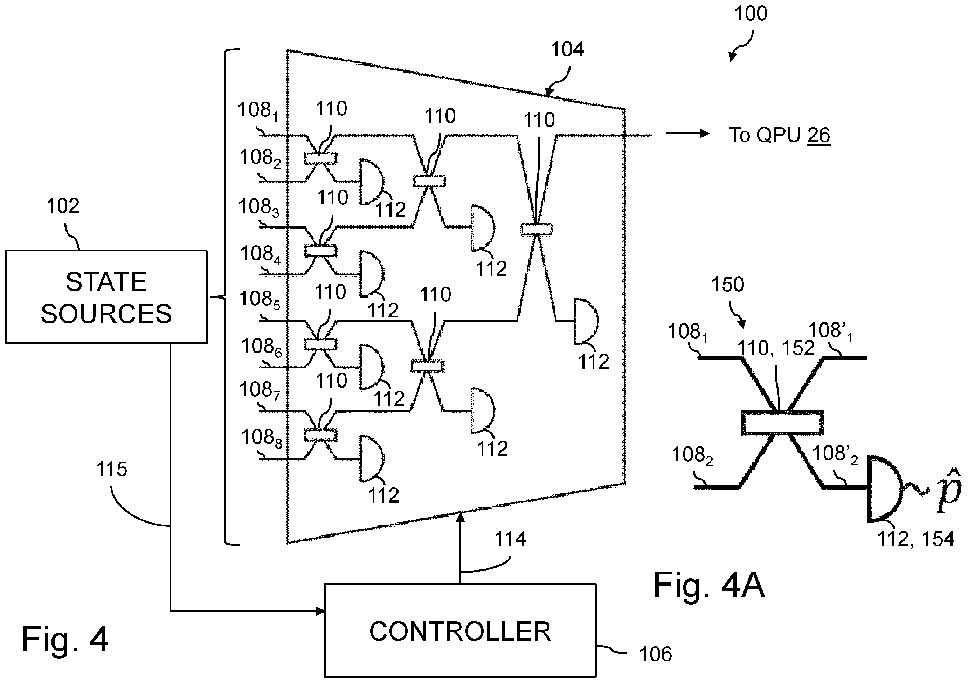

Fig. 4 shows an example of a system 100 for processing photonic states and generating GKP states. As depicted, the system 100 has photonic state sources 102, an optical circuit 104, and a controller 106 communicatively coupled to the photonic state sources 102 and to the optical circuit 104. The optical circuit 104 has optical links $108_1$ to $108_N$, N-1 two-mode entangling gates 110 optically coupling pair(s) of the optical links to one another, and N-1 Gaussian detectors 112 downstream of one or more of the optical links $108_1$-$108_N$. Each two-mode entangling gate 110 is actuatable in either an entanglement state or a routing state. The two-mode entangling gates 110 can be moved from the entanglement state to the routing state, or vice versa, via actuation signals 114 generated by the controller 106. During use of the system 100, the photonic state sources propagate photonic states along respective ones of the optical links. As will be further described below, the controller receives breedability signal(s) 115 from the state factory, and/or from individual ones of the photonic state sources 102, determines which one(s) of the two-mode entangling gates 110 are actuated in the entangling state and which one(s) of the two-mode entangling gates 110 are actuated in the routing state based on the breedability signal 115, and then actuates the two-mode entangling gates 110 in accordance with the previous determination using respective actuation signals 114.

In some embodiments, the state factory of an exemplary photonic quantum computing system can include more than one instance of the system 100. For instance, a plurality of systems 100 can be used in parallel (and/or in series) to generate multiple GKP states in a simultaneous (and/or sequential) manner. In certain embodiments, these multiple GKP states, generated by individual ones of the systems 100, would be output from the state factory and received by the stitcher.

More specifically, the controller 106 has a processor and a non-volatile memory having stored thereon instructions that when executed perform the steps of: receiving a breedability signal 115 indicating breedability statuses associated to the photonic states propagated along the respective optical links 108; and actuating the two-mode entangling gates 110 in either the entanglement state or the routing state based on the breedability statuses, said actuating including i) actuating one of the two-mode entangling gates 110 into the entanglement state when the optical links 108 of the corresponding pair both propagate a breedable photonic state, and ii) actuating another one of the two-mode entangling gates 110 into the routing state when one of the optical links 108 of the corresponding pair propagates a non-breedable photonic state. One or more GKP state(s) are generated by propagating the photonic states through the two-mode entangling gates 110 and using the Gaussian detector(s) 112. In certain embodiments, the controller 106 is also communicatively coupled to the Gaussian detectors 112 to receive the measurements therefrom.

More thoroughly described, many pairs of the optical links 108 are optically coupled to one another via a corresponding two-mode entangling gate 110. With one Gaussian detector 112 optically coupled to one of the optical links 108 downstream from the two-mode entangling gate 110, an entangling gate and detector assembly 150 is formed, an example of which is shown in Fig. 4A. As depicted, the entangling gate and detector assembly 150 has two input optical links $108_1$ and $108_2$, a two-mode entangling gate 110 optically coupling the two input optical links $108_1$ and $108_2$, and two output optical links $108'_1$ and $108'_2$. As the first output optical link $108'$, is allowed to be routed away from the entangling gate and detector assembly 150, towards the remainder of the optical circuit 104, the second output optical link $108'_2$ is optically coupled to the Gaussian detector 112 which produces corresponding measurements such as state $\hat{p}$ quadrature measurements. When the two-mode entangling gate 110 is actuated in the entanglement state, a first photonic state propagating along the input optical link $108_1$ and a second photonic state propagating along the second input optical link $108_2$ are entangled to one another. The resulting entangled photonic state is then routed partially along the two optical output links $108'_1$ and $108'_2$, one of which is measured using the Gaussian detector 112, and the one which is not measured defining a bred photonic state. This scenario is generally favored when the first and second photonic states are deemed to be breedable photonic states as per the breedability signal 115 received from the state factory and/or from the photonic state sources 102. When one of the first and second photonic states is deemed to be a non-breedable photonic state, then the two-mode entangling gate 110 is actuated in the routing state and acts as a multiplexer. However, there can exist two different routing states. A first one of the routing states allows the first photonic state propagating along the first input optical link $108_1$ to be routed away from the entangling gate and detector assembly 150, towards the remainder of the optical circuit 104 via the first output optical link $108'_1$, and the second photonic state to be routed towards the Gaussian detector 112 via the second output optical link $108'_2$. The second routing state is inversed relative to the first routing state. For instance, the second routing state allows the first photonic state propagating along the first input optical link $108_1$ to be routed towards the Gaussian detector 112 via the second output optical link $108'_2$, and the second photonic state is allowed to be routed away from the entangling gate and detector assembly 150, towards the remainder of the optical circuit 104 via the first output optical link $108'_1$. As shown, all of the upper output optical links 108' of the entanglement gate and detector assemblies 150 lead, directly or indirectly, to the QPU 26 which receives the resulting bred photonic state(s) as inputs for photonic quantum computation purposes.

In this specific embodiment, the two-mode entangling gates 110 are provided in the form of adaptive beamsplitters 152, and the Gaussian detectors 112 are provided in the form of homodyne detectors 154. In these embodiments, the state in which the two-mode entangling gate 152 is actuated depends on a beamsplitter angle of the adaptive beamsplitter 152. For instance, the first routing state can be achieved by moving the beamsplitter angle to 0 radians (or $\pi/2$ radians), the second routing state can be achieved by moving the beamsplitter angle to $\pi/2$ radians (or 0 radians), and the entanglement state can be achieved by moving the beamsplitter angle at an intermediate beamsplitter angle extending between 0 radians and π/2 radians (or multiple thereof), exclusively. In some embodiments, for the entanglement state, the beamsplitter angle is based on separations between peaks of the first and second breedable photonic states. In some other embodiments, other state parameters can additionally or alternatively be used to determine the proper intermediate beamsplitter angle. However, other embodiments for the two-mode entangling gates 110 and Gaussian detectors 112 can be equivalently used, in which case the beamsplitter angle may be a splitting angle, as described further below.

The following analysis helps to estimate the depth savings for this hybrid MUX-breeding approach compared with the MUXing followed by breeding. Let $p_{GBS}$ be the probability of a single GBS device successfully producing a state that is good enough for breeding. The probability of having $M$ good states being produced by $N$ GBS devices is then given by:

$$p_{N\text{-to-}M} = \sum_{k=M}^{N} \binom{N}{k} p_{GBS}^k (1 - p_{GBS})^{N-k} = 1 - \sum_{k=0}^{M-1} \binom{N}{k} p_{GBS}^k (1 - p_{GBS})^{N-k},$$

where $\binom{N}{k} p_{GBS}^k (1 - p_{GBS})^{N-k}$ is the probability that exactly $k$ GBSs succeed. For $M = 1$, an N-to-1 multiplexer has a success probability of:

$$p_{N\text{-to-}1} = 1 - (1 - p_{GBS})^N.$$

In this case, $M$ N-to-1 multiplexers are needed, giving a total success probability of $p_T = (p_{N\text{-to-}1})^M$, while for the optical circuit proposed herein the total probability is $p_T = P_{N\text{-to-}M}$. With these equations, the total depth of the optical circuit can be calculated and compared with the conventional array of N-to-1 multiplexers and breeding unit for a target total success probability. In this disclosure, the term "depth" or "circuit depth" is meant to encompass the size of a circuit expressed as the number of gates it contains and its depth is the maximal length of a path from an input gate to the output gate.

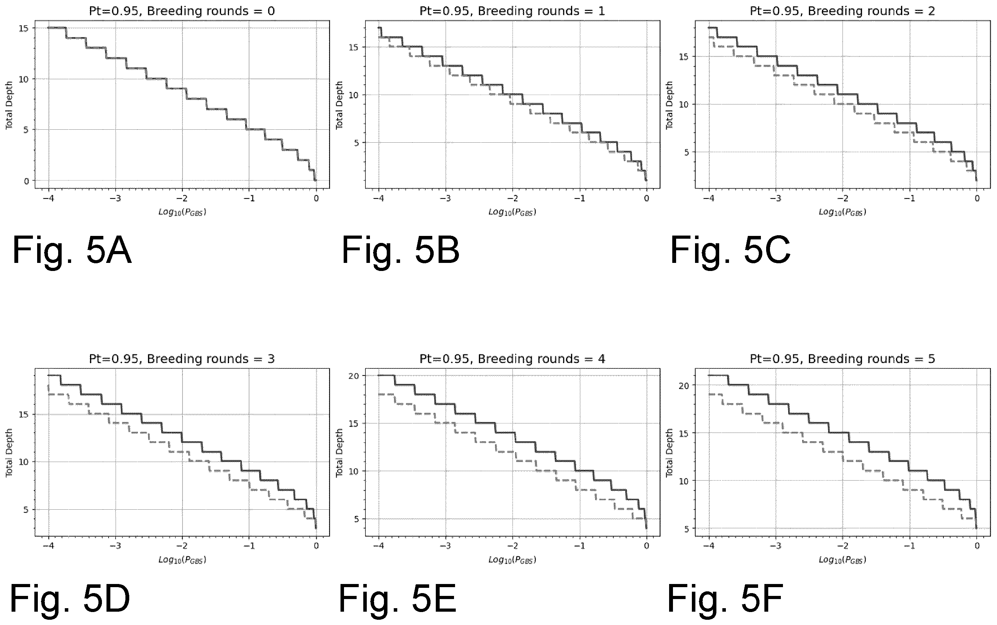

To breed $2^m$ photonic states using the conventional array of N-to-1 multiplexers and breeding unit, a depth $m$ is required, along with a binary tree taking $N = 2^n$ inputs that have a depth $n$, so the total depth for the N-to-1 multiplexers following by the breeding circuit is $n + m$. For the optical circuit described herein, with $N' = 2^{n'}$ inputs, the total depth is $n'$. Figs. 5A through 5F show a comparison of the total depth of the optical circuit proposed herein (dashed lines) and the conventional array of N-to-1 multiplexers and breeding unit (solid lines) for a target total success probability of 95% for an increasing number of breeding rounds.

The preceding analysis gives only a rough estimate of the overheads and total circuit depth. To study more realistic performance of the optical circuit proposed herein, the details of the GBS output states, the MUX ranking function, and the probabilistic nature of the breeding protocol itself could be included.

As an illustrative example of the downside to splitting up MUX and breeding, for the same number of inputs ($2^{10}$) and same loss tolerance, a refinery consisting of the conventional array of N-to-1 multiplexers and breeding unit was only able to produce a GKP state (9.75 dB squeezing) with 40% probability, as opposed to 50% probability for the optical circuit proposed herein. Moreover, the optical circuit proposed herein has more flexibility for how to use input states from shot-to-shot that can be leveraged in the future.

The following paragraphs elaborate on the detailed functioning of a specific example of the optical circuit proposed herein. This analysis proves that all possible configurations of the optical circuit, dependent shot-to-shot on which of the optical links the breedable photonic states land, can be mapped to an equivalent circuit. More specifically, these configurations can be mapped to one standard configuration that is equivalent to an N-to-M multiplexer, followed by a linear cascade breeder. This configuration can be relevant not just for reducing the number of configurations that require simulation, but also because it shows that there is no preferable configuration that performs better than the other. The proposed optical circuit is thereby convenient regardless of which one(s) of the optical links the breedable photonic states may land.

As described above, the optical circuit proposed herein combines a multiplexer unit and a breeding unit in the same optical circuit by taking advantage of the two-mode entangling gates (which can be actuated in a number of different entanglement or routing states), and using them as a breeder by putting homodyne detectors along the path of what would have been a discarded photonic state (by the conventional array of N-to-1 multiplexers and breeding unit). In other words, each two-mode entangling gate can be set to any splitting ratio R such that it can act as a multiplexer switch for splitting ratios of 0% or 100%, or as a breeder for splitting ratios 0% < R < 100% (with the addition of the homodyne detector).

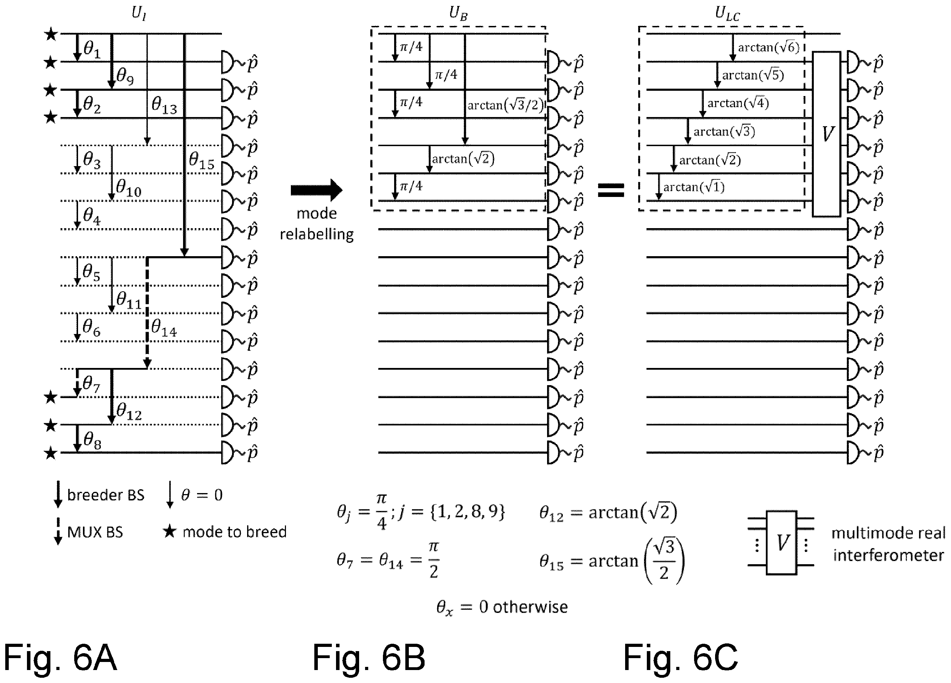

Fig. 6A shows an example of an optical circuit having 16 optical input links receiving corresponding photonic states from a state factory or corresponding photonic state sources. The stars mark photonic states that are deemed to be breedable photonic states. The other unmarked photonic states are non-breedable photonic states. This example assumes that all of the photonic states inputted to the optical circuit share the same peak spacing (which can be accomplished with a round of squeezing before arriving to the optical circuit, or alternatively differences in peak spacing which can be compensated for by adjusting the splitting ratios accordingly. Given the $2^n$ inputs to the binary tree, the photonic states to be bred are selected using some state parameters, as inferred from the breedability signal. At each layer, the splitting ratio of each two-mode entangling gate is set depending on whether the two-mode entangling gate is to act as a multiplexer (using the routing states) or as a breeder (using the entanglement state). As shown in Fig. 6A, each vertical line represents a two-mode entangling gate which is provided in the form of an adaptive beamsplitter in this embodiment. Accordingly, the splitting ratio R can be substituted for a beamsplitter angle $\theta$. After each adaptive beamsplitter, the photonic state at the bottom output optical link is always measured using a Gaussian detector provided in the form of a homodyne detector in this embodiment. To operate the adaptive beamsplitter as a multiplexer, the beamsplitter angle is set to 0 radians or to $\pi/2$ radians such that the selected photonic states (those marked with stars) are routed to the upper output optical link and the discarded photonic states (those without stars) are discarded via routing toward the bottom output optical link, and ultimately to the corresponding homodyne detector.

When two breedable photonic states are to be bred, the beamsplitter angle is set such that:

$$\theta = \arctan\left(\frac{s_u}{s_l}\right),$$

wherein $s_u$ is the peak spacing of the first photonic state at the upper input optical link of the adaptive beamsplitter and $s_l$ is the peak spacing of the second photonic state at the lower input optical link of the adaptive beamsplitter. If all the photonic states have the same spacing at the input of the optical circuit, then $s_u$ and $s_l$ can be set as the inverse of the square root of the number of states that were bred before entering the upper and lower input optical links of the beamsplitter, respectively.

The multiplexer part of the optical circuit moves photonic states around such that the breedable photonic states can interact through the original binary tree circuit. Formally, the following identify can be used:

$$\mathrm{BS}_{ij}(\theta)\mathrm{BS}_{jk}\left(\frac{\pi}{2}\right) = \mathrm{BS}_{jk}\left(\frac{\pi}{2}\right)\mathrm{BS}_{ik}(\theta),$$

to move the multiplexing adaptive beamsplitters to the beginning of the optical circuit. Those multiplexing adaptive beamsplitters at the beginning of the optical circuit are equivalent to a permutation of the input photonic states and possibly some $\pi$ rotations to some of the photonic states. This means that after some relabelling of the input photonic states and the measured output photonic states, the matrix describing the whole interferometer $U_I$ can be written as:

$$U_I \rightarrow \begin{pmatrix} U_B & 0 \\ 0 & U_D \end{pmatrix},$$

where $U_B$ is the unitary describing the interaction between the breedable photonic states, and $U_D$ is the unitary for the discarded, non-breedable photonic states which can be set as a diagonal matrix with only $\pm 1$ elements on the diagonal.

Assuming input photonic states having equally spaced peaks, the output photonic state of each stage of the breeding part of the optical circuit is an equal superposition of the photonic states being bred. Therefore, the optical circuit, restricted to the breedable photonic states, is described as a unitary matrix $U_B$ of the form:

$$U_B = \frac{1}{\sqrt{N}}\begin{pmatrix} 1 & \cdots & 1 \\ \vdots & \ddots & \vdots \\ M_{N-1,1} & \cdots & M_{N-1,N} \end{pmatrix} = \begin{pmatrix} \frac{1}{\sqrt{N}} \frac{1}{\sqrt{N}} \frac{1}{\sqrt{N}} \frac{1}{\sqrt{N}} \\ M \end{pmatrix},$$

where $M$ is an $(N-1) \times N$ matrix whole values are determined by the initial positions of the breedable photonic states at the input of the optical circuit. Any circuit that comes from the optical circuit described herein can be related to (1) a standard circuit (in this case, a linear cascade) on the breedable photonic states and (2) the identity over the non-breedable, discarded photonic states.

Let $U_{LC}$ be the unitary matrix describing the linear cascade circuit. A unitary $A$ relating $U_B$ to $U_{LC}$ as $U_B = A \cdot U_{LC}$

implies that $A = U_B U_{LC}^\dagger$ always exists. Since the first row of $U_{LC}$ is equal to the first row of $U_B$, $(U_{LC})_{ij} = \frac{1}{\sqrt{N}} \forall j$.
Therefore, the unitary $A$ has the form:

$$A = \begin{pmatrix} 1 & \vec{0}^T \\ \vec{0} & V \end{pmatrix},$$

where $\vec{0}$ is a vector of zeros of length $N - 1$ and $V$ is an $(N - 1) \times (N - 1)$ unitary matrix. Since $V$ does not act on the output photonic state and is a real interferometer (i.e., it doesn't mix the $p$ quadrature with the q quadrature), it can be absorbed into the $p$ homodyne measurements. This also implies that the distribution of the output photonic states is independent of the location of the inputs to be bred. This is because any input configuration is mapped to a linear cascade breeder through a unitary transformation $V$ and, given that $|\det V| = 1$, the probability of a given state to show up is the same for the initial circuit and for the linear cascade. It is worth noting that the equivalence also holds when homogeneous loss is present, i.e., in the case that each mode undergoes the same amount of loss. This is because homogeneous loss commutes with linear optics, so the loss to the input states can be applied and the lossless circuit can be transformed as before. Such mode relabelling procedures are represented schematically in Figs. 6B and 6C, with $V$ representing a real interferometer.

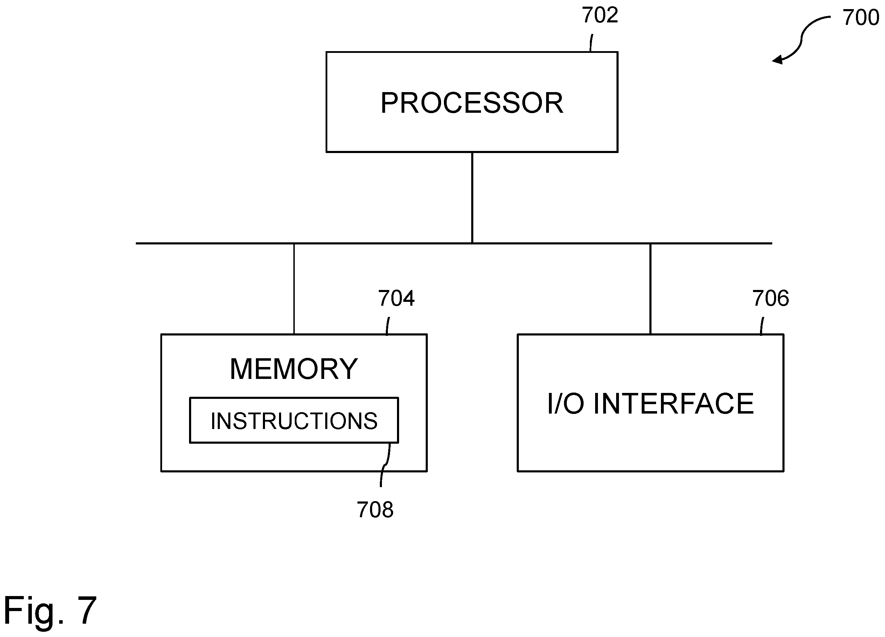

The controller described above can be provided as a combination of hardware and software components. The hardware components can be implemented in the form of a computing device 700, an example of which is described with reference to Fig. 7. The computing device 700 can have a processor 702, a memory 704, and I/O interface 706. Instructions 708 for controlling the actuation of the two-mode entangling gate(s) based on the breedability signal can be stored on the memory 704 and accessible by the processor 702.

The processor 702 can be, for example, a general-purpose microprocessor or microcontroller, a digital signal processing (DSP) processor, an integrated circuit, a field-programmable gate array (FPGA), a reconfigurable processor, a programmable read-only memory (PROM), a programmable logic controller (PLC), or any combination thereof.

The memory 704 can include a suitable combination of any type of computer-readable memory that is located either internally or externally such as, for example, random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like.

Each I/O interface 706 enables the computing device 700 to interconnect with one or more input devices, such as the photonic state source(s) or associated breedability signal generator(s), or with one or more output devices such as two-mode entangling gates actuation control module(s), and the like.

Each I/O interface 706 enables the controller to communicate with other components, to exchange data with other components, to access and connect to network resources, to serve applications, and perform other computing applications by connecting to a network (or multiple networks) capable of carrying data including the Internet, Ethernet, plain old telephone service (POTS) line, public switch telephone network (PSTN), integrated services digital network (ISDN), digital subscriber line (DSL), coaxial cable, fibre optics, satellite, mobile, wireless (e.g., Wi-Fi, WiMAX), SS7 signaling network, fixed line, local area network, wide area network, and others, including any combination of these.

The computing device 700 and any software application that can be run by the computing device 700 are meant to be examples only. Other suitable embodiments of the controller can also be provided, as it will be apparent to the skilled reader.

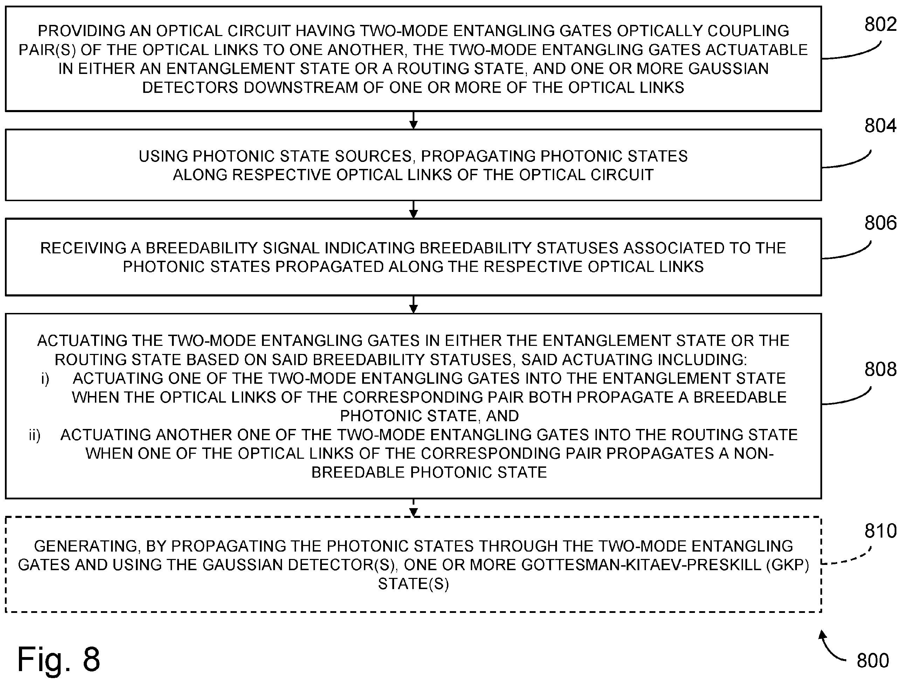

Fig. 8 shows a flow chart of an example method 800 for generating GKP states. The method 800 can be performed by a system such as the one described with reference to Fig. 4.

At step 802, an optical circuit is provided. The optical circuit has two-mode entangling gates optically coupled pair(s) of optical links to one another. The optical links can be provided in the form of optical fiber links. As discussed above, the two-mode entangling gates are actuatable in either an entanglement state or a routing state. The optical circuit also has one or more Gaussian detector(s) downstream of one or more of the optical links.

At step 804, photonic states generated by the photonic state sources are propagated along respective ones of the optical links of the optical circuit. It is encompassed that the photonic states can be CV photonic states (hereinafter simply referred to as "photonic states"). The photonic states can include, but are not limited to, squeezed photonic states such as one-peak photonic states, two-peak photonic states (also referred to as squeezed cat states or simply cat states), three-peak photonic states, and four-peak photonic states, to name a few examples. In these embodiments, the photonic states can be defined by peak height(s), peak width(s), peak (or tooth) separation(s), and the like.

Preferably, each of the photonic state sources is optically connected to the optical circuit via a direct optical connection. In some embodiments, the direct optical connection is provided in the form of an optical fiber link. It is noted that conventional N-to-1 multiplexers are omitted as all of the photonic states generated by the photonic state sources make their way to the optical circuit thanks to the dedicated optical links. In some embodiments, the photonic state sources include an integer number M of photonic state sources, and the Gaussian detector(s) include an integer number N of Gaussian detectors. In these embodiments, the integer number N generally corresponds to M-1, the integer M being two or more. In certain embodiments, the integer number M is at least four (4), preferably at least eight (8) and most preferably at least sixteen (16). The greater the number M of photonic state sources, the greater the probability of generating photonic states that are breedable, i.e., of satisfactory usefulness or quality.

At step 806, a breedability signal is received. The breedability signal indicates breedability statuses associated to the photonic states propagated along the respective optical links. In some embodiments, the breedability signal can indicate which one(s) of the photonic states are breedable photonic states. In some other embodiments, the breedability signal can be indicative of which one(s) of the photonic states are non-breedable photonic states. Additionally or alternatively, the breedability signal can indicate whether each photonic state is a breedable photonic state or a non-breedable photonic state. An identifier (e.g., location, serial number) identifying which optical link propagates which photonic state can be part of the breedability signal in some embodiments. The indication of breedability of the photonic states can be based on peak height $H_p$, peak width $W_p$, a peak separation $S_p$, or a combination thereof. For instance, when the peak(s) of a given photonic state are above a given height threshold, or when the peak(s) of the given photonic states have a width (e.g., full width at half maximum) below a given width threshold, the given photonic state may be deemed to be a breedable photonic state. For instance, a breedability signal can include the following information: optical link #1 propagates a breedable (or non-breedable) photonic state having peak heights $H_{pj}{}^1$, peak widths $W_{pj}{}^1$, and/or a peak separation $S_p{}^1$; optical link #2 propagates a breedable (or non-breedable) photonic state having peak heights $H_{pj}{}^2$, peak widths $W_{pj}{}^2$, and/or a peak separation $S_p{}^2$, and so forth, until: optical link #M propagates a breedable (or non-breedable) photonic state having peak heights $H_{pj}{}^M$, peak widths $W_{pj}{}^M$, and/or a peak separation $S_p{}^M$. The breedability signal can include other data combinations depending on the embodiments. In some embodiments, indication of breedability of the photonic states can be based on one or more photon-number-resolving (PNR) measurements received from the photonic state sources. The PNR measurement outcomes may be indicative of the aforementioned peak heights, peak widths, and peak separations. The photonic state sources may include GBS devices comprising PNR detectors, for example.

At step 808, the two-mode entangling gates are actuated either in the entanglement state or the routing state based on the breedability statuses. More specifically, the step 808 of actuating includes i) actuating one of the two-mode entangling gates into the entanglement state when the optical links of the corresponding pair both propagate a breedable photonic state, and ii) actuating another one of the two-mode entangling gates into the routing state when one of the optical links of the corresponding pair propagates a non-breedable photonic state. As such, the state in which each of the two-mode entangling gates is actuated is dictated by the breedability of the photonic states propagated along the optical links. In some embodiments, the states of the two-mode entangling gates are further based on the peak height, the peak width and/or the peak separation of the corresponding photonic states.

As such, the breedable photonic states received from the photonic sources are entangled to one another using corresponding two-mode entangling gates actuated in the entanglement state. However, at least some of the non-breedable photonic states received from the photonic sources are routed using the corresponding two-mode entangling gates actuated in the routing state. In some embodiments, the non-breedable photonic states are routed towards corresponding Gaussian detectors. It is intended that, in some embodiments, a first breedable photonic state propagating along a first optical link can be routed to a second optical link via two or more two-mode entangling gates (either actuated in the entanglement state or in any of two routing states) and corresponding optical links. For instance, when the other one of the two-mode entangling gates is actuated into the routing state, a breedable photonic state propagating along the other one of the optical links of the corresponding pair can be routed to another pair of the optical links through one or more two-mode entangling gates. It is intended that as the two-mode entangling gates can be actuated either in the entanglement state or in the routing state, the two-mode entangling gate and Gaussian detector assemblies can perform a first function of routing breedable and/or non-breedable photonic state(s) where desired within the optical circuit in addition to a second function of breeding breedable photonic states by entangling them to one another. These two functions being performed within the same optical circuit, the optical circuit described proposed herein thus has a circuit depth which is smaller than that of the conventional N-to-1 multiplexers and breeding unit configurations, therefore requiring fewer optical components for a given number of breeding rounds and a given total success probability.

At step 810, one or more GKP state(s) are generated by propagating the photonic states through the two-mode entangling gates and using the Gaussian detector(s). The GKP state(s) generated as output(s) of the optical circuit can be optically guided or otherwise transmitted to the QPU in some embodiments. In certain embodiments, the actuation of the two-mode entangling gates can be reset to a default state (e.g., either the entangled state or the routing state) after a first set of GKP state(s) has been generated. In some embodiments, the system described herein can be used to process photonic states, and not necessarily generate GKP state(s). In these embodiments, the step 810 can be omitted.

It is noted that the method 800 can be repeated for another, second set of photonic states generated by the photonic state sources and propagated towards the optical circuit. For instance, the method 800 can have a further step of propagating a second set of photonic states along the respective optical links of the optical circuit, a further step of receiving a second breedability signal indicating new breedability statuses associated to the second set of photonic states propagated along the respective optical links, and a further step of modifying said actuating the two-mode entangling gates in either the entanglement state or the routing state based on the new breedability statuses. In these embodiments, the actuation of the two-mode entangling gates can either be moved from the default state, or any previously used states of actuation, to the desired states of actuation depending on which one(s) of the optical links propagate breedable photonic states. By repeating the above steps sequentially over time, different sets of GKP state(s) can be generated.

In some embodiments, the two-mode entangling gates are actuatable to modify a splitting ratio between the optical links of corresponding pairs. The splitting ratio can range between 0% and 100%, inclusively, in these embodiments. More specifically, a splitting ratio of 0% or 100% can correspond to the routing state, and a splitting ratio between 0% and 100%, exclusively, can correspond to the entanglement state. A splitting ratio of 0% or 100% can change which one of the optical links of the pair sees its photonic state forwarded downstream of the optical circuit. Accordingly, the routing state can include a first routing state, in which a first photonic state propagating along a first one of the optical links is routed downstream of the optical circuit, or a second routing state, in which a second photonic state propagating along a second one of the optical links is routed downstream of the optical circuit. The splitting ratio of the entanglement state can depend on a plethora of state parameters including, but not limited to, the peak height(s), the peak width(s), and/or the peak separation(s) of each one of the two breedable photonic states. More specifically, in embodiments where peak separation is emphasized, the splitting ratio of the entanglement state is based on a ratio between a first peak separation value indicative of a peak separation between peaks of a first one of the breedable photonic states and a second separation value indicative of a peak separation between peaks of a second one of the breedable photonic states.

In embodiments where the two-mode entangling gates are provided in the form of adaptive beamsplitters, the splitting ratio can translate into a beamsplitter angle. More specifically, in these embodiments, the adaptive beamsplitters can be actuatable to modify a beamsplitter angle between the optical links of the corresponding pair. The beamsplitter angle can range between 0 radians and $\pi/2$ radians, inclusively. For instance, a beamsplitter angle of 0 radians or $\pi/2$ radians typically corresponds to the routing state, whereas a splitting ratio between 0 radians and $\pi/2$ radians, exclusively, corresponds to the entanglement state.

It is understood that, although the adaptive beamsplitters may be a preferred embodiment, the two-mode entangling gates do not necessarily have to be provided in the form of adaptive beamsplitters. In fact, in some other embodiments, the two-mode entangling gates can also be provided in the form of controlled-displacement gates such as a continuous-variable CX or CZ gates. Such CX or CZ gates can be implemented in the form of beamsplitters, squeezers $S$ ($\pm r$), and phase shifters $R\left(\frac{\pi}{2}\right)$. Examples of such CX or CZ gates are described in the scientific paper Bourassa, J. Eli, et al. "Blueprint for a scalable photonic fault-tolerant quantum computer." Quantum 5 (2021): 392, the contents of which are hereby incorporated by reference.

Moreover, it was found convenient to provide the Gaussian detectors in the form of homodyne detectors. In these embodiments, each homodyne detector mixes the corresponding photonic state signal with a local oscillator (LO) of the same frequency at a 50:50 beamsplitter, detects the two outputs of the beamsplitter using two detectors (e.g., photodiodes), and then outputs the difference between the two detectors. The phase between the photonic state signal and the LO determines which quadrature is being measured. In some other embodiments, the Gaussian detectors can be provided in the form of heterodyne detectors. In these latter embodiments, each heterodyne detector first splits the photonic state signal at a 50:50 beamsplitter, and then performs homodyne measurements on each of the two outputs of the beamsplitter, with each of the two homodyne measurements done in different quadratures (i.e., one $q$-homodyne and one p-homodyne). Another example of Gaussian detectors involves generaldyne detectors. Generaldyne detectors are operated in a similar manner as the heterodyne detectors, but the angles of the two homodyne measurements are to angles other than $q$ and $p$. Indeed, the two homodyne angles allow the tuning of the level of squeezing and the angle of the squeezed state basis onto which it is projecting.

As can be understood, the examples described above and illustrated are intended to be exemplary only. The scope is indicated by the appended claims.

**Claims**

1. A method of generating Gottesman-Kitaev-Preskill (GKP) states, the method comprising:

   using a plurality of photonic state sources, propagating a plurality of photonic states along respective optical links of an optical circuit, the optical circuit having a plurality of two-mode entangling gates optically coupling pair(s) of the optical links to one another, the two-mode entangling gates actuatable in either an entanglement state or a routing state, and one or more Gaussian detectors downstream of one or more of the optical links;

receiving a signal indicating breedability statuses associated to the plurality of photonic states propagated along the respective optical links;

actuating the two-mode entangling gates in either the entanglement state or the routing state based on said breedability statuses, said actuating including i) actuating one of the two-mode entangling gates into the entanglement state when the optical links of the corresponding pair both propagate a breedable photonic state, and ii) actuating another one of the two-mode entangling gates into the routing state when one of the optical links of the corresponding pair propagates a non-breedable photonic state; and

generating, by propagating the plurality of photonic states through the two-mode entangling gates and using the Gaussian detector(s), one or more GKP state(s).

2. The method of claim 1 wherein, when the other one of the two-mode entangling gates is actuated into the routing state, a breedable photonic state propagating along the other one of the optical links of the corresponding pair is routed to another pair of the optical links.

3. The method of claim 1 or 2 wherein the two-mode entangling gates are actuatable to modify a splitting ratio between the optical links of corresponding pairs, the splitting ratio ranging between 0% and 100%, inclusively, wherein a splitting ratio of 0% or 100% corresponds to the routing state, and a splitting ratio between 0% and 100%, exclusively, corresponds to the entanglement state.

4. The method of claim 3 wherein the splitting ratio of the entanglement state is based on a ratio between a first tooth separation value indicative of a tooth separation between peaks of a first one of the breedable photonic states and a second separation value indicative of a tooth separation between peaks of a second one of the breedable photonic states.

5. The method of any one of claims 1 to 4 wherein at least one of the two-mode entangling gates is provided in the form of an adaptive beamsplitter actuatable to modify a beamsplitter angle between the optical links of the corresponding pair, the beamsplitter angle ranging between 0 radians and $\pi/2$ radians, inclusively, wherein a beamsplitter angle of 0 radians or $\pi/2$ radians corresponds to the routing state, and a splitting ratio between 0 radians and $\pi/2$ radians, exclusively, corresponds to the entanglement state.

6. The method of any one of claims 1 to 5 wherein at least one of the one or more Gaussian detectors is provided in the form of a homodyne detector.

7. The method of any one of claims 1 to 6 wherein the plurality of photonic state sources includes an integer number M of photonic state sources, and the one or more Gaussian detectors includes an integer number N of Gaussian detectors, wherein the integer number N corresponds to M-1, the integer M being 2 or more.

8. The method of any one of claims 1 to 7 wherein the photonic states are provided in the form of at least one of: squeezed photonic states, two-peak photonic states, three-peak photonic states, and four-peak photonic states.

9. The method of any one of claims 1 to 8 further comprising propagating another plurality of photonic states along the respective optical links of the optical circuit, receiving another signal indicating new breedability statuses associated to the other plurality of photonic states propagated along the respective optical links, and modifying said actuating the two-mode entangling gates in either the entanglement state or the routing state based on the new breedability statuses.

10. The method of any one of claims 1 to 9 wherein the plurality of photonic state sources are directly connected to the respective optical links.

11. A system for generating Gottesman-Kitaev-Preskill (GKP) states, the system comprising:

an optical circuit having:

a plurality of optical links,
a plurality of two-mode entangling gates optically coupling pair(s) of the optical links to one another, the two-mode entangling gates actuatable in either an entanglement state or a routing state, and one or more Gaussian detectors downstream of one or more of the optical links;

a plurality of photonic state sources propagating a plurality of photonic states along respective ones of the plurality of optical links; and

a controller having a processor and a non-volatile memory having stored thereon instructions that when executed perform the steps of:

receiving a signal indicating breedability statuses associated to the plurality of photonic states propagated along the respective optical links; and

actuating the two-mode entangling gates in either the entanglement state or the routing state based on said breedability statuses, said actuating including i) actuating one of the two-mode entangling gates into the entanglement state when the optical links of the corresponding pair both propagate a breedable photonic state, and ii) actuating another one of the two-mode entangling gates into the routing state when one of the optical links of the corresponding pair propagates a non-breedable photonic state;

wherein one or more GKP state(s) are generated by propagating the plurality of photonic states through the two-mode entangling gates and using the Gaussian detector(s).

12. The system of claim 11 wherein the two-mode entangling gates are actuatable to modify a splitting ratio between the optical links of corresponding pairs, the splitting ratio ranging between 0% and 100%, inclusively, wherein a splitting ratio of 0% or 100% corresponds to the routing state, and a splitting ratio between 0% and 100%, exclusively, corresponds to the entanglement state.

13. The system of claim 11 or 12 wherein the splitting ratio of the entanglement state is based on separations between peaks of the breedable photonic states.

14. The system of any one of claims 11 to 13 wherein at least one of the two-mode entangling gates is provided in the form of an adaptive beamsplitter actuatable to modify a beamsplitter angle between the optical links of corresponding pairs, the beamsplitter angle ranging between 0 radians and $\pi/2$ radians, inclusively, wherein a beamsplitter angle of 0 radians or $\pi/2$ radians corresponds to the routing state, and a splitting ratio between 0 radians and $\pi/2$ radians, exclusively, corresponds to the entanglement state.

15. The system of any one of claims 11 to 14 wherein at least one of the one or more Gaussian detectors is provided in the form of homodyne detectors.

Fig. 1

18

$|\psi\rangle$

$|n_2\rangle$  $|n_1\rangle$  $|n_0\rangle$

18

Fig. 2

Fig. 3

EP 4 660 899 A1

Fig. 4

Fig. 4A

Fig. 5A

Fig. 5B

Fig. 5C

Fig. 5D

Fig. 5E

Fig. 5F

$U_I$

$\theta_1$
$\theta_9$
$\theta_2$    $\theta_{13}$
$\theta_3$
$\theta_{10}$
$\theta_4$
$\theta_{15}$
$\theta_5$
$\theta_{11}$
$\theta_6$    $\theta_{14}$
$\theta_7$
$\theta_{12}$
$\theta_8$

$\hat{p}$

↓ breeder BS    ↓ $\theta = 0$

↓ MUX BS    ★ mode to breed

$U_B$

$\pi/4$
$\pi/4$
$\pi/4$    $\arctan(\sqrt{3}/2)$
$\arctan(\sqrt{2})$
$\pi/4$

$\hat{p}$

mode relabelling

$U_{LC}$

$\arctan(\sqrt{6})$
$\arctan(\sqrt{5})$
$\arctan(\sqrt{4})$
$\arctan(\sqrt{3})$
$\arctan(\sqrt{2})$
$\arctan(\sqrt{1})$

$V$

$\hat{p}$

=

$\theta_j = \dfrac{\pi}{4}; j = \{1, 2, 8, 9\}$     $\theta_{12} = \arctan(\sqrt{2})$

$\theta_7 = \theta_{14} = \dfrac{\pi}{2}$     $\theta_{15} = \arctan\left(\dfrac{\sqrt{3}}{2}\right)$

$\theta_x = 0$ otherwise

$V$    multimode real interferometer

## Fig. 6A     Fig. 6B     Fig. 6C

702
700

PROCESSOR

704
706

MEMORY

INSTRUCTIONS

I/O INTERFACE

708

Fig. 7

PROVIDING AN OPTICAL CIRCUIT HAVING TWO-MODE ENTANGLING GATES OPTICALLY COUPLING PAIR(S) OF THE OPTICAL LINKS TO ONE ANOTHER, THE TWO-MODE ENTANGLING GATES ACTUATABLE IN EITHER AN ENTANGLEMENT STATE OR A ROUTING STATE, AND ONE OR MORE GAUSSIAN DETECTORS DOWNSTREAM OF ONE OR MORE OF THE OPTICAL LINKS — 802

USING PHOTONIC STATE SOURCES, PROPAGATING PHOTONIC STATES ALONG RESPECTIVE OPTICAL LINKS OF THE OPTICAL CIRCUIT — 804

RECEIVING A BREEDABILITY SIGNAL INDICATING BREEDABILITY STATUSES ASSOCIATED TO THE PHOTONIC STATES PROPAGATED ALONG THE RESPECTIVE OPTICAL LINKS — 806

ACTUATING THE TWO-MODE ENTANGLING GATES IN EITHER THE ENTANGLEMENT STATE OR THE ROUTING STATE BASED ON SAID BREEDABILITY STATUSES, SAID ACTUATING INCLUDING:
  i)  ACTUATING ONE OF THE TWO-MODE ENTANGLING GATES INTO THE ENTANGLEMENT STATE WHEN THE OPTICAL LINKS OF THE CORRESPONDING PAIR BOTH PROPAGATE A BREEDABLE PHOTONIC STATE, AND
  ii) ACTUATING ANOTHER ONE OF THE TWO-MODE ENTANGLING GATES INTO THE ROUTING STATE WHEN ONE OF THE OPTICAL LINKS OF THE CORRESPONDING PAIR PROPAGATES A NON-BREEDABLE PHOTONIC STATE
— 808

GENERATING, BY PROPAGATING THE PHOTONIC STATES THROUGH THE TWO-MODE ENTANGLING GATES AND USING THE GAUSSIAN DETECTOR(S), ONE OR MORE GOTTESMAN-KITAEV-PRESKILL (GKP) STATE(S) — 810

Fig. 8 — 800

EP 4 660 899 A1

## EUROPEAN SEARCH REPORT

Application Number

EP 25 18 0611

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 375 887 A1 (XANADU QUANTUM TECH INC [CA]) 29 May 2024 (2024-05-29) * title, Abstract * * [0004]-[0005],[0007],[0015]-[0016],[0019],[0027],[0044],[0051],[0081],[0124],[0129],[0140] * * figures 5,22 * ----- | 1-15 | INV. G06N10/40 G06N10/70 |
| A | US 2023/281499 A1 (BOURASSA JOSEPH ELI [CA] ET AL) 7 September 2023 (2023-09-07) * [0004],[00043]-[0044],[0049],[0055],[0077]; figures 3A,3B,6C * ----- | 1,15 | |

**TECHNICAL FIELDS SEARCHED (IPC)**

G06N
B82Y
H04B

The present search report has been drawn up for all claims

| Place of search | Date of completion of the search | Examiner |
|---|---|---|
| The Hague | 26 September 2025 | Veynachter, Alexis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 0611

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2025

| Patent document cited in search report | | Publication date | Patent family member(s) | | Publication date |
|---|---|---|---|---|---|
| EP 4375887 | A1 | 29-05-2024 | EP | 4375887 A1 | 29-05-2024 |
| | | | US | 2024346357 A1 | 17-10-2024 |
| US 2023281499 | A1 | 07-09-2023 | AU | 2021352452 A1 | 18-05-2023 |
| | | | CA | 3195906 A1 | 07-04-2022 |
| | | | CN | 116507583 A | 28-07-2023 |
| | | | EP | 4222660 A1 | 09-08-2023 |
| | | | JP | 2023544543 A | 24-10-2023 |
| | | | US | 2022101168 A1 | 31-03-2022 |
| | | | US | 2023281499 A1 | 07-09-2023 |
| | | | WO | 2022067431 A1 | 07-04-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BOURASSA, J. ELI et al.** Blueprint for a scalable photonic fault-tolerant quantum computer. *Quantum*, 2021, vol. 5, 392